# EUROPEAN PATENT SPECIFICATION

(11) **EP 2 613 731 B1**
(45) Date of publication and mention of the grant of the patent: **24.01.2018**
(21) Application number: 11757276.8
(22) Date of filing: 12.09.2011
(51) Int. Cl.: A61C 19/00

(54) **DENTAL INSTRUMENT CLEANING DEVICE**
VORRICHTUNG ZUM REINIGEN VON ZAHNÄRZTLICHEN GERÄTEN
DISPOSITF DE NETTOYAGE D'INSRUMENTS DENTAIRES

(30) Priority: 10.09.2010 LU 91727
(43) Date of publication of application: 17.07.2013
(73) Proprietor: NSK Euro Holdings S.A., 1225 Luxembourg (LU)
(72) Inventor: LAMOUREUX, Bruno, 75017 Paris (FR)
(74) Representative: Marks & Clerk (Luxembourg) LLP
(86) International application number: PCT/EP2011/065777
(87) International publication number: WO 2012/032190

(56) References cited:
- EP-A1- 1 949 917
- WO-A1-94/15547
- US-A- 5 723 090
- US-B1- 6 379 614

## Description

### Technical field

The present invention relates to devices used in dentistry, and in particular to devices for automatically cleaning, disinfecting and maintaining dynamical dental handpieces and instruments.

### Background of the invention

In dentistry, virtually all treatments involve the intervention of an instrument, or a dental handpiece, inside the patient's mouth. Dental handpieces are powered tools, which interface with connections that are provided on a dentist's chair. These connections provide access to electricity, spray water, and compressed air, for example. Depending on the surgery that is performed on the patient, specifically suited tools may be connected through the interface. These specific tools may for example include drills that are powered by compressed air, or lights. The materials used in the manufacture of dental handpieces are typically high-grade materials such as titanium, stainless steel or ceramics. Dental handpieces are mechanically involved devices, which must enable a dentist to work both reliably and with great precision. Therefore it is necessary to regularly check such handpieces for proper functioning, to clear them of any stains both internal and external, and to maintain their internal gear drives through regular lubrication.

As a dental instrument or handpiece is entered into the patient's oral cavity, it will enter into direct contact with the patient's saliva and blood during a dental surgery. If such stains dry out on the interior surfaces of a handpiece, they may obstruct the internal drives and cause malfunctioning. Moreover, a dental handpiece may be contaminated with bacteria and/or viruses present in the patient's mouth. This increases the risk of cross-contaminating other patients with these bacteria and/or viruses, e.g. if the handpiece or instrument is not properly decontaminated prior to treating the next patient.

If a dental handpiece is not regularly cleaned, there is an increasing risk of a biofilm forming both on the internal and external surfaces of the equipment. A biofilm is an aggregate of microorganisms such as bacteria or viruses, which adhere to each other and/or to a surface. It has been shown that biofilms are extremely resistant to disinfecting agents, which are otherwise efficient for killing bacteria or viruses. Once a biofilm will have formed on a dental instrument, the risk for cross-contamination through the instrument's use is increased.

In order to efficiently eliminate a bioflim, it is necessary to detach it from the surface it is adhering to, and to dispose of the biofilm subsequently. The adherence can typically be broken by using a cleaning agent, or through mechanical action.

Several products and devices are commonly used in a dentist's practice in order to prevent bacteria and viruses from cross-contaminating both patients and the practicing dentist, and in order to ensure the continuous proper functioning of the dental instruments. The following brief overview will however highlight several deficiencies of the commonly used tools and practices.

Cleaning and disinfecting wipes offer a quick way of cleaning and disinfecting the outer surfaces of dental instruments and handpieces after they have been used during an oral surgery. Time is an important factor, as the instruments need to be cleared of stains, bacteria and viruses in between the treatment of two consecutive patients. However, due to the purely superficial nature of cleaning and disinfecting, the use of wipes is inappropriate for cleaning the interior of handpieces, where stains, bacteria and viruses remain untouched and unharmed.

An autoclave is used to sterilize the dentist's instruments and handpieces. An autoclave is a device that exposes the instruments and handpieces to high pressure and high temperature steam, in order to kill off bacteria and viruses. For sterilization in the autoclave, the instruments and handpieces are packed into special bags, which will only be opened immediately prior to their next use, in order to avoid new contaminations in the meantime. However, in order for the autoclave to be effective, dried stains such as dried saliva or blood need to be removed from both the interior and exterior faces of the treated instruments. The autoclave itself is not able to remove these stains, and if they remain on the instrument before being exposed to the high-pressure steam, these stains may damage the instruments themselves.

Away of ridding the instruments and handpieces from dried stains, is through the use of ultrasonic cleaning devices. In an ultrasonic cleaning device, the instruments typically bathe in a reservoir filled with a cleaning solution, in which they are exposed to high frequency sound waves, known as ultrasonic waves. The vibrations induced by the ultrasonic waves are able to detach dried stains on and inside the instruments. A major drawback of ultrasonic cleaning devices resides in the fact that their use on dental instruments which include ceramic parts, is prohibited. The ultrasonic waves may damage or destroy the ceramic instruments.

Recently, automatic cleaning devices for dental instruments and handpieces have been developed. Document EP 1 949 917 A1 discloses a device and a method for preparing medical instruments, especially handpieces, which uses a prewashing, washing and disinfecting step. The device provides automatic cleaning, disinfection and lubrication internally and externally of the handpiece, by using a specific dosage of a specific fluid.

As for the device disclosed by the above mentioned document, typically such known automatic devices provide means for automatically directing a jet of a combined cleaning and disinfecting solution into the internal mechanism of a handpiece, and in a parallel direction to the axis of the handpiece, in order to clean the outside faces of the handpiece. The known automatic cleaning devices use a large quantity of a combined cleaning and disinfecting solution, which needs to be rinsed off the instruments using a jet of demineralized water. Therefore, such devices need to be connected to a supply of demineralized water. They also need to be connected to a sewer, in order to eliminate the large quantities of waste liquid resulting from a full cleaning cycle. This may hinder the adoption of such known devices by dentists, who may not have the possibility to install the device in proximity of a sewer in their practice. A further obstacle in adopting the use of such known automatic devices lies in the relatively long cleaning cycle of up to 15 minutes. As a combined cleaning and disinfecting solution is used, the ability to remove biofilms from the instruments is in general limited.

Devices for the maintenance of the internal drives of dental handpieces exist in the form of known manual lubrication devices and known automatic lubrication devices. In both cases, lubricating oil is injected into the internal drive of a handpiece. Prior to this operation, the internal drive must be free of any dried stains in order not to damage the drive. Most of the known lubrication devices use a can of pressurized oil, which may be difficult to dispose of, and which may even form a security hazard in some situations.

In order to efficiently clean and maintain their handpieces, dentists therefore have to use a combination of the above treatments and install a number of devices in the limited space of their practice. None of the known devices gives completely satisfactory results as to the level of automatic cleaning and disinfection, as to the cycle length that would be short enough so as to use a full cleaning cycle and to lubricate a number of handpieces between the treatment of two consecutive patients, and as to the flexibility and use of installation in a dental practice.

Recently, norm NF EN 14561 has been adopted in France, which will require dentists to equip their practices with both fast and effective cleaning and disinfecting equipment for the sake of their own safety and that of their patients. Other countries are likely to follow along the same route.

It is therefore an object of the present invention to alleviate or to overcome at least some of the disadvantages of the conventional devices and techniques described above.

### SUMMARY OF THE INVENTION

The invention relates to a device according to claim 1 and methods according to claim 8 and 12. A device according the present invention is used for cleaning and disinfecting at least one dental handpiece both internally and externally. The device comprises means for receiving a cleaning solution and a disinfecting solution. The device further comprises a port for connecting a compressed air supply, and a treatment chamber. The treatment chamber advantageously comprises at least one handpiece port for connecting a dental handpiece comprising at least one outlet for cleaning and disinfecting the internal structure of a dental handpiece. The treatment chamber further comprises at least one spray dispensing nozzle for cleaning and disinfecting the external faces of a dental handpiece, and at least one waste liquid outlet. The device comprises conveying means for conveying said cleaning solution from said receiving means to said at least one handpiece port and to said at least one spray dispensing nozzle. Further conveying means are provided to convey said disinfecting solution from said receiving means to said at least one handpiece port and to said at least one spray dispensing nozzle. Further conveying means are provided to convey said compressed air from said port to said at least one handpiece port and to said at least one spray nozzle. According to an embodiment of the present invention, the orientation of the axis of the at least one handpiece port is not substantially collinear with the orientation of the axis of said at least one spray dispensing nozzle. The device comprises an electrical motor, which is operatively arranged to set the internal drive of a handpiece that is connected to the at least one handpiece port into motion. The device may preferably comprise at least one dosing means for dosing the amount of disinfecting and cleaning solution that is conveyed from said receiving means to said at least one handpiece port.

Preferably, the dosing means may comprise a tube 7710 arranged substantially vertically. More preferably, the dosing means may comprise at least one sensing means for detecting the level of liquid inside said tube 7710.

The device may further comprise means for receiving lubricating oil. Each handpiece port may comprise at least a second outlet for lubricating the internal drive of a dental handpiece. The device may further provide conveying means for conveying said lubricating oil to said second handpiece port outlet.

The device comprises an electrical motor, which is operatively arranged to set the internal drive of a handpiece that is connected to the at least one handpiece port into motion.

Preferably, the device may comprise waste liquid collecting means. The waste liquid collecting means may be advantageously arranged to collect waste liquids from the treatment chamber through said at least one chamber outlet.

The waste liquid collecting means may preferably comprise a removable trough.

More preferably, said means for receiving a cleaning solution, a disinfecting solution and lubricating oil, may comprise a receiving chamber. The receiving chamber may preferably include sections for respectively receiving a cleaning solution, a disinfecting solution and lubricating oil. At least one outlet may further be provided in each section.

The device may preferably comprise conveying means connecting the at least outlet of each of said receiving chamber sections to said waste liquid collecting means.

Even more preferably, the device may comprise controlling means that are operable for selectively enabling the supply, and controlling the amount, of said cleaning solution, disinfecting solution, lubricating oil and compressed air that is conveyed to said at least two handpiece port outlets, and to said at least one spray nozzle.

The controlling means may be programmable controlling means.

At least one of the receiving sections of said receiving chamber may preferably comprise means for receiving a supply container.

At least one receiving section may further preferably comprise means for piercing said supply containers.

Said piercing means may comprise two substantially vertical electrodes of different lengths. Each of the electrodes may comprise an opening leading into a hollow tube. The longer electrode may further comprise an electrically insulating material on its outer surface.

More preferably, said piercing means may comprise two substantially vertical and concentric tubes. The outer tube may have a larger diameter than the inner tube. A chamber of annular section may therefore be formed between the two tubes. The piercing means may further comprise at least one opening leading into the inner tube, and at least one opening leading into said annular chamber.

Even more preferably, said piercing means may comprise an outer tube. The outer tube may comprise a distal end section having a smaller diameter, and a proximal end section having a larger diameter. The outer tube may further comprise at least one opening leading into the proximal end section, and at least one opening leading into the distal end section. The preferred piercing means may further comprise an inner tube having an exterior diameter that substantially matches the inner diameter of said distal end section of the said outer tube. Preferably, said inner tube may be sealingly inserted into said outer tube.

The cleaning solution may preferably comprise a mixture of propylene glycol, parabens, biguanides and complexing agents in acqueous solution.

The disinfecting solution may preferably comprise 30 to 50 weight-% of ethanol and 5 to 15 weight-% of isopropanol with nonhazardous additions in aqueous solution.

Preferably the treatment chamber of the device according to an embodiment of the present invention may comprise a removable door.

According to the present invention as defined in claim 8, a method of cleaning and disinfecting at least one dental handpiece is provided. The method may include the steps of selectively injecting a cleaning solution and a disinfecting solution into the interior body of at least one handpiece, and selectively spraying said cleaning and disinfecting solutions onto the exterior faces of said handpiece. The direction of the spray may preferably not be substantially collinear with the orientation of the axis of the at least one handpiece. The method further comprises setting the internal drive of a handpiece that is connected to at least one handpiece part into motion with an electric motor. The cleaning solution used in the method may preferably comprise a mixture of propylene glycol, parabens, biguanides and complexing agents in aqueous solution.

The disinfecting solution used in the method may preferably comprise 30 to 50 weight-% of ethanol and 5 to 15 weight-% of isopropanol with nonhazardous additions in aqueous solution.

More preferably, the method comprises spraying 0.83 cm³ of the cleaning solution into said treatment chamber. Further, the method may advantageously comprise the injection of 0.86 cm³ of the cleaning solution into the interior of each dental handpiece. Preferably, the solution may be allowed to act on the material during 37s before being rinsed with compressed air.

Most preferably, this cleaning procedure may be repeated four times consecutively.

Even more preferably, the method may comprise spraying 3.32 cm³ of the disinfecting solution into the treatment chamber, as well as injecting 2.075 cm³ of the disinfecting solution injected into the interior of each dental handpiece. The solution may then be allowed to act on the material during 120 s, before being rinsed with compressed air.

Most preferably, the method may further comprise the injection of lubricating oil into the internal drive of each dental handpiece.

According to the present invention a preferred method of operating the preferred device in order to clean at least one handpiece that may be connected to the at least one handpiece port of the device may include the following steps:
- spraying of 0.83 cm³ of the cleaning solution into the treatment chamber through the at least one spray nozzle,
- injection of 0.86 cm³ of the cleaning solution into the interior of each dental handpiece through said at least one handpiece port outlet
- allowing the cleaning solution to act on the material during 37 s before being rinsed with compressed air, which may be conveyed through said at least one handpiece port outlet and said at least one spray nozzle.

The method of operating the preferred device may further preferably comprise the following steps to disinfect the at least one handpiece that may be connected to the at least one handpiece port:
- spraying 3.32 cm³ of the disinfecting solution into the treatment chamber through said at least one spray nozzle,
- injecting 2.075 cm³ of the disinfecting solution into the interior of each dental handpiece through said at least one handpiece port outlet
- allowing the disinfecting solution to act on the material during 120 s before being rinsed with compressed air conveyed through said at least one handpiece port outlet and said at least one spray nozzle.

Most preferably, the preferred method of operating the preferred device may further comprise the injection of lubricating oil into the internal drive of the at least one connected dental handpiece through the second handpiece port outlet.

The device and method according to the present invention allows for efficient and fast removal of blood, bacteria, viruses and biofilms from both the internal and external surfaces of dental handpieces. As the device does not need to be connected to a water supply nor to a sewage drain, it may be integrated easily into the existing working environment of a dentist. As the proposed method of operating the device allows for fast and efficient cleaning, disinfecting and lubricating of dental handpieces, its use may be adopted in between the treatment of two consecutive patients. This decreases the risk of cross-contaminating patients through the use of the instruments.

### BRIEF DESCRIPTION OF THE DRAWINGS

Several embodiments of the present invention are illustrated by way of figures, which do not limit the scope of the invention which is defined by the appended claims, wherein:
Figure 1 shows an isometric view of an example device.
Figure 2 shows an isometric view of a preferred embodiment of a device according to the present invention, including means for receiving lubricating oil.
Figure 3 shows an isometric view of a preferred embodiment of a device according to the present invention, including waste liquid collecting means.
Figure 4 shows an isometric view of a preferred embodiment of a device according to the present invention, wherein a removable waste liquid trough is provided.
Figure 5 shows an isometric view of a preferred embodiment of a device according to the present invention, wherein a receiving chamber is provided.
Figure 6 shows an isometric view representing the structure of a preferred embodiment of a device according to the present invention.
Figure 7 shows a vertical cut a cleaning solution receiving section according to the present invention, including a dual needle piercing structure.
Figure 8a shows a vertical cut of a cleaning solution receiving section according to the present invention, including a single needle piercing structure.
Figure 8b shows a vertical cut of a preferred embodiment of a single needle piercing structure.
Figure 9 shows a schematic view of an implementation of a preferred embodiment of the device according to the present invention.
Figure 10 shows a schematic view of an implementation of another preferred embodiment of the device according to the present invention.

### DETAILED DESCRIPTION OF THE INVENTION

A device according to the present invention is used to automatically clean and disinfect dental handpieces and turbine handpieces from stains such as bacteria, viruses and biofilms. Regular handpieces are generally powered by electric micromotors to which the handpieces are couples during use. Typically, such handpieces have standardized interfaces to provide a connection of the internal spray pipes to demineralized water (W), compressed air (A) supplies, and to provide access to the internal drive (D) of the handpiece. Turbine handpieces do not rely on an electrical micromotor, but include a rotor that is set in motion by compressed air. During use, the air and some of the water that enters through the turbine handpiece connectors (A) and (W) respectively, will exit the turbine handpiece through an additional return port (R).

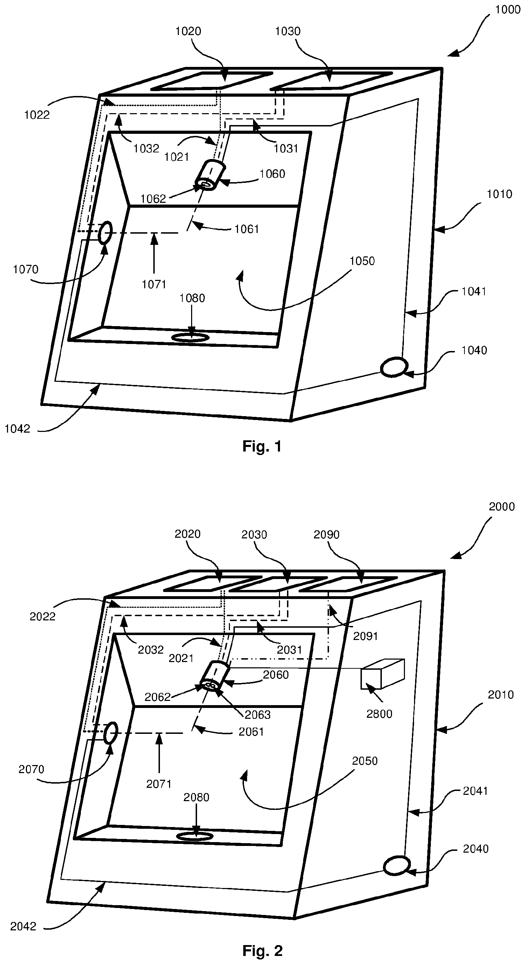

Device 1000 in Figure 1 is an example of a device. Devices 2000, 3000, 4000, 5000, and 6000 according to embodiments of the present invention are shown in Figures 2 to 6, each of the latter figures depicting a specific embodiment of the device. Like reference numerals designate like devices or parts thereof.

The example device 1000 illustrated in Fig 1 comprises a housing 1010, which presents a port for connecting the device to an electric power supply, and to a compressed air supply 1040. Both supplies are readily available in a dentist's practice, as part of the usual working environment. The installation of the device does therefore not impose any further constrains on the integration of the proposed device into the dentist's existing working environment.

The device includes a treatment chamber 1050, which is preferably accessible from the front side of the device. The treatment chamber gives the user access to a number of handpiece ports, to which dental handpieces may be connected. The at least one handpiece port 1060 is preferably situated at a position in the chamber such that its axis 1061 extends in a substantially downward direction. A handpiece that is connected to the at least one handpiece port therefore preferably extends from its base to its head in a substantially vertical downward direction. If multiple handpiece ports are provided, they are preferably all arranged in a similar direction.

Each handpiece port provides an interface allowing to directly connect the connectors that are present on the handpiece to the device. The handpiece port therefore provides at least one outlet 1062. Said outlet is used for injecting liquid and air through the handpiece port into the (W) and (A) connectors of the handpiece. The interface allows for cleaning and/or disinfecting the interior of a handpiece that is coupled to the device's handpiece port. The cleaning and/or disinfecting is performed using liquids and/or air during the device's normal operation.

The treatment chamber 1050 further comprises at least one spray nozzle 1070, which is capable of being fed with, and of dispensing of, both air and liquids. The arrangement of the nozzle is such that its axis 1071 is not substantially collinear with the axis 1061 of the described handpiece port or ports. If multiple nozzles are present on the device, all nozzles should be positioned following the same rule, and their respective axis should not be substantially collinear with the axis 1061 of the described handpiece ports.

The spray nozzle 1070 is capable of producing a uniform pressurized mist inside the treatment chamber 1050, which may enclose the handpieces uniformly during the operation of the device. The mist is formed of very fine liquid drops. These drops settle on the exterior surfaces of the connected handpieces. The liquid drops in the mist are able to uniformly settle even in remote spots of a handpiece's exterior surface, which are otherwise difficult to access. Depending on the exact shape of the treatment chamber 1050, the arrangement of the nozzle 1070 with respect to the handpiece ports 1063 is adaptable by the skilled man in order to provide a uniform mist production inside the treatment chamber.

The use of mist rather than jets further allows to optimize the treated surface per volume of used solution. Therefore, the proposed device is more efficient than known automatic cleaning devices and reduces the volume of liquids that need to be used, while at the same time increasing the cleaning and disinfecting efficiency.

The treatment chamber 1050 further presents an outlet or drain 1080, which is preferably arranged at the lowest point of the chamber, as shown in Figures 1 to 6. This arrangement allows all waste liquids that are present in the chamber to be evacuated from the chamber through the outlet.

A device according to the present invention may further comprise receiving means 1020 and 1030 for respectively receiving a cleaning solution and a disinfecting solution. These means may be in the form of recipients, into which a user may pour the respective solutions if the liquid levels run low. This operation however involves the risk of spilling the respective solutions

In a preferred embodiment, shown in Figure 2, the proposed device may further be used to lubricate the internal drive of a connected handpiece. A preferred device according to the present invention therefore comprises receiving means 2090 for receiving lubricating oil. As will be described below, the oil is preferably not pressurized, and means for pressurizing the oil using the compressed air supply are provided.

The device further provides an electrical motor 2800 that is operable to set the internal drive mechanism of each handpiece connected to a handpiece port in motion during a cleaning, disinfecting or lubrication cycle of the device.

In order to clean, disinfect and inject lubricating oil the gear drive of a handpiece, an additional outlet 2063 is provided on the device's handpiece port, which interfaces directly with the drive (D) connector of the handpiece, and which allows for the injection of compressed liquids and lubricating oil into the internal drive of the handpiece. The respective conveying means for conveying compressed air, the cleaning solution, the disinfecting solution and lubricating oil to the additional outlet are provided.

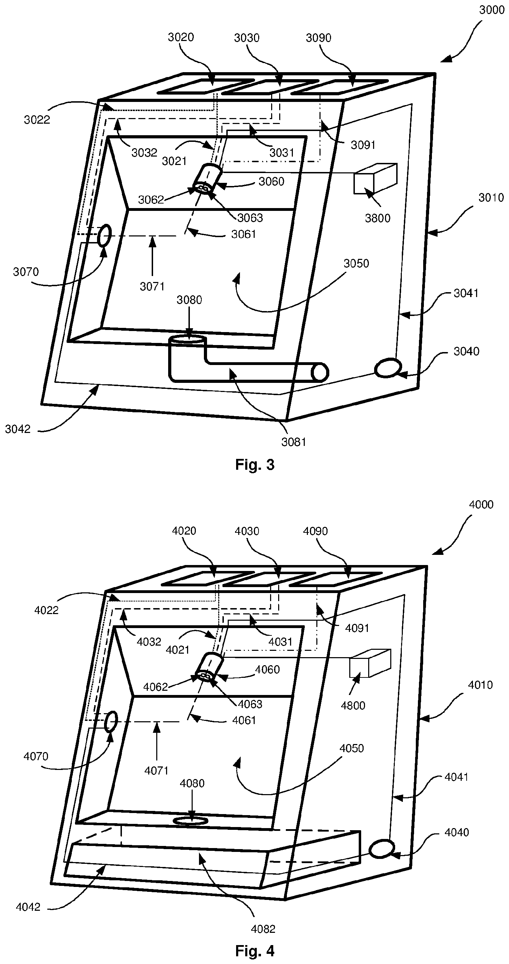

As shown in Figure 3, the device according to the present invention further comprises means 3081 for collecting waste liquids. Waste liquids that amass in the treatment chamber 3050 during the normal operation of the device are evacuated from the treatment chamber 3050 through the outlet 3080. The waste collecting means 3080 may therefore be arranged so as to collect the waste liquids directly from said outlet 3080. The waste liquid collecting means 3081 may be provided by a connection to a sewage drain, or by a connection to a recipient that is external to the device.

In a device 4000 according to a further embodiment of the present invention, shown in Figure 4, the waste liquid collecting means are provided by a removable drawer forming a through 4082, which, when properly inserted into the device, sits immediately below the outlet 4080 of the treatment chamber 4050 and collects all waste liquids passing through.

As mentioned, there is a risk of spilling a solution or oil when refilling the respective receiving means for respectively receiving a cleaning solution, a disinfecting solution and lubricating oil.

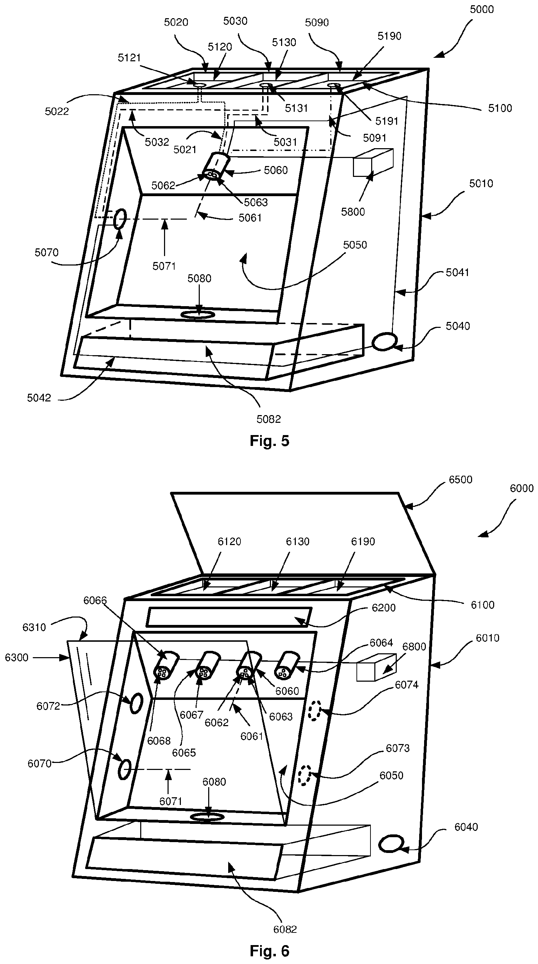

It is therefore preferred that the device further comprises a receiving chamber 5100, as shown in Figure 5. The receiving chamber 5100 provides sections 5120 and 5130 and 5190, that are arranged to receive bottled supplies of the respective cleaning solution, disinfecting solution, and lubricating oil. The lubricating oil may preferentially be provided in an oil tank. Preferably, the tank comprises a floating sensor, which is able to detect a low level of oil. This detection signal may be used to alert the user of the device that an oil tank replacement is needed. Each section provides an outlet 5121, 5131, 5191 at their respective bottom, from which the respective supplies may be distributed inside the device.

As depicted in Figure 6, a further embodiment of the device 6000 according to the present invention comprises a receiving chamber 6100, which is accessible from the top of the device and which is closable by a cover top 6500. The preferred treatment chamber 6050 has a box-like structure comprising top- and bottom walls, two sidewalls and a back wall, the box being open towards the front of the device 6000. Preferably, a user interface panel 6200 is located above the treatment chamber. It may allow the user to start the operation of the device, or to choose an appropriate cleaning, disinfecting or lubricating cycle. The interface 6200 may comprise display means as well as push-buttons or touch-sensitive surfaces for interacting with the device. The preferred four handpiece ports 6063, 6064, 6065, 6066 are arranged in a line on the top wall of the box-like treatment chamber. The chamber 6050 preferably comprises four spray nozzles 6070, 6072, 6073, 6074 capable of producing a uniform mist inside the treatment chamber 6050, which may enclose the handpieces uniformly during the operation of the device. Two of the nozzles, 6070, 6072 are provided in a substantially linear arrangement on one of the sidewalls of the box-like treatment chamber 6050. They are oriented in a way so as to dispense spray in the direction of the middle section of the chamber 6050, where the handpieces are located during the operation of the device. The remaining two nozzles 6073, 6074 are oriented in a similar way, but they are located on the opposing sidewall. Depending on the exact shape of the treatment chamber 6050, the arrangement of the nozzles 6070, 6072, 6073, 6074 with respect to the handpiece ports 6063, 6064, 6065, 6066 is adaptable by the skilled man in order to provide a uniform mist production inside the treatment chamber.

In an alternative embodiment, nozzles may also be present on the back-wall of the box-like chamber.

As shown in Figure 6, the treatment chamber 6050 preferably provides a frontal door 6300, which may be made out of a translucent material, such as glass or translucent plastic. In order to install the handpieces or turbine handpieces that are to be cleaned, disinfected and / or lubricated, the door 6300 is opened and the instruments are connected to the respective ports 6063, 6064, 6065, 6066. Before starting a cleaning cycle, the door 6300 is closed. Preferably, the door 6300 comprises a sealing joint 6310 along its edges, so as to effectively seal the chamber 6050 from the exterior environment of the device 6000. This avoids any waste liquids to exit through the joints of the door 6300. It is preferable that the door 6300 is removable, so that a user may clean it thoroughly. Removable door mechanisms are known in the art. A preferred removable door provides a structure that is located substantially in the middle of the edge of the door, around which the door opens. A corresponding structure on the device is provided to releasably engage with the structure on the removable door. As these engaging means are located centrally, and not on two opposing edges of the door's opening axis, it is possible for a user to disengage the mechanism, and therefore remove the door, with a single hand operation.

It may be preferred that, the device 6000 also includes a sensor, which is capable of detecting if the door 6300 is in closed or open state.

The preferred waste drawer or trough 6082 may include a top cover having an opening for receiving waste liquids, and gasket for reliably sealing the connection between the receiving chamber outlet an the waste drawer may be provided. Furthermore, the waste drawer or trough 6082 may include a sensor, which produces a signal once the drawer is full of waste liquid. This signal may be used to notify to the user that the drawer needs to be emptied. A further sensor on the device may indicate the presence of the drawer. Both sensing functions may be implemented using a single sensing device.

Due to the specific structure and functioning of turbine handpieces, a turbine handpiece port for specifically supporting the return (R) connector of the turbine handpiece may further be included. A turbine handpiece port 6065 is shown in Figure 6. It interfaces in a similar way with the turbine handpiece port as the regular handpiece port does with the regular handpiece. Additionally, it presents an inlet 6067 for receiving any air or liquid that exits through the return connector (R) during the cleaning and disinfecting operation of the proposed device. In contrast to the regular handpieces, the internal drive of the turbine handpieces are set in motion by the injected compressed air during a cleaning, disinfecting or cleaning cycle.

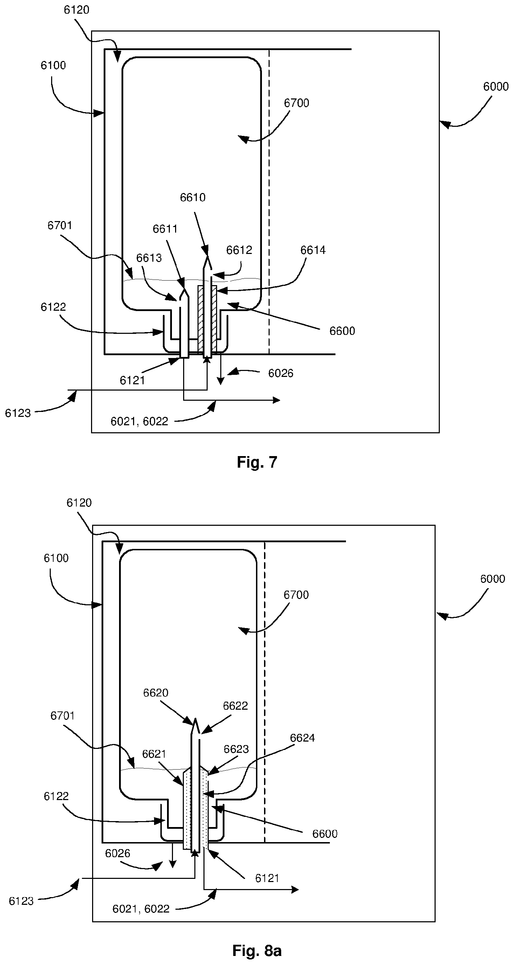

If a turbine handpiece port is present on the device, the inlet 6067 that receives the surplus liquids through the described return (R) connector, may also preferably be directly connected to the waste liquid collecting means through appropriate conveying means 6069, as shown in Figure 7, and as will be further described.

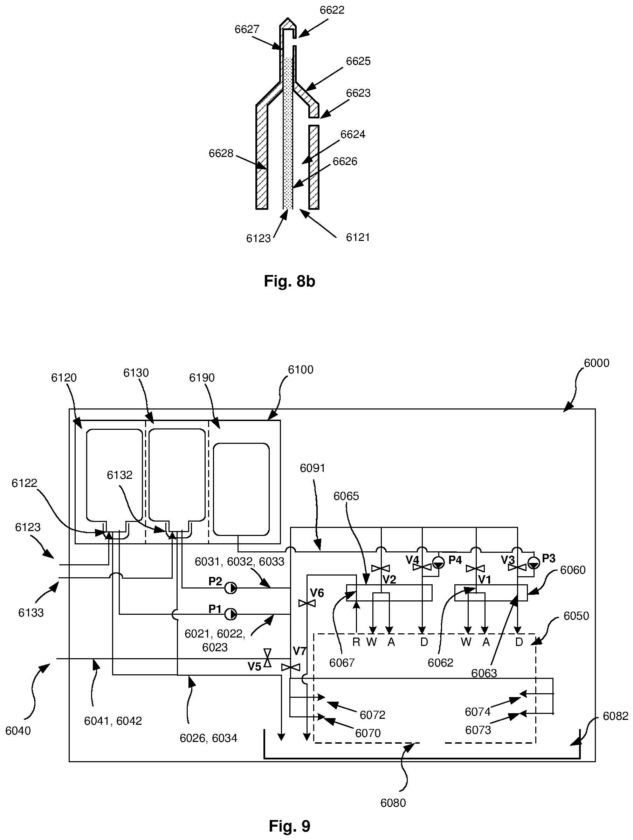

As shown in Figure 6, the most preferred device includes two regular handpiece ports 6060, 6064 and two turbine handpiece ports 6065, 6068, presenting additional inlets 6067 and 6068 respectively, as described above. It is appreciated that any number of ports or combination of these port types does not fall outside the scope of the present invention which is defined by the appended claims. Preferably, the receiving sections 6120, 6130 of the receiving chamber 6100 include piercing means 6600 that are provided at their respective bottom. A detailed view of preferred piercing means and of the receiving section 6120 is shown as an example in Figures 7 and 8. It can be appreciated that section 6120 comprises means 6122 for receiving a supply bottle 6700. A supply bottle 6700 may be sealed by an elastomere membrane before it is being used in the device. During installation of the container or bottle 6700 into the device, the bottle is inserted upside-down into the receiving section 6120, onto said piercing means 6600. The function of the piercing means 6600 is three-fold: the membrane that seals the bottle 6700 is opened only upon installing the bottle 6700 into the receiving chamber 6100 of the device 6000. On the other hand, the liquid may be pumped from the inside of the bottle 6700 into the device itself through the same piercing means 6600, which are connected to the outlet 6121. Furthermore, the piercing means 6600 may be used to detect a low level of supply remaining in the supply bottle, as will be further described.

Preferred piercing means 6600 are shown in Figure 7. The piercing means 6600 may comprise two needle structures 6610, 6611, which extend substantially vertically upwards from the bottom surface of said receiving section 6612. Both needle structures 6610, 6611 are made of an electroconductive metal and comprise each a hollow tube extending inside the respective needle structure. The two needle structures 6610, 6611 have different lengths and provide at least one opening 6612, 6613 into their respective hollow tubes at their respective ends. The tube of the shorter needle structure 6613 may be connected to a pump through liquid conveying means 6021 and may thus be used to pump liquid out of the bottle 6700 through the opening 6121. The tube of the longer needle structure 6610 may be connected to ambient air 6123. Air arriving through the opening 6612 into the container, is able to compensate for the pressure loss inside the container 6700, as liquid is being pumped out. The lower part of the longer needle structure 6610 may be wrapped in an electrically insulating material 6614. An electric potential difference may be applied to the two needle structures 6610 and 6611. As long as both needle structures 6610 and 6611 are completely submerged by the liquid inside the bottle 6700, an electric current circulates between both needle structures through the liquid. Once the liquid level 6701 inside the bottle 6700 is low enough to immerge only the insulated part 6614 of the longer needle 6610 structure, the electric current ceases to circulate between both needle structures 6610 and 6611. This signal may be used to notify the need for a replacement supply bottle to the user.

An alternative, more preferred embodiment of the piercing means 6600, is depicted in Figure 8a. Only one needle structure, which extends substantially vertically from the bottom of e receiving section 6120, is provided. The needle structure comprises two concentric hollow tubes 6620, 6621 of different diameters and different lengths, each providing at least one opening 6622, 6623 at their respective ends. The longer tube 6620 has a smaller diameter than the shorter outer tube 6621.

A chamber of annular cross-section 6624 is formed in between the inner surface of the shorter tube 6621 and the outer surface of the longer tube 6620. This chamber 6624 forms a channel, which connects to the outlet 6121, and through which the supplied liquid may be pumped out of the bottle 6700 and into the device. Air to compensate for the pressure loss inside the bottle 6700 is provided through the longer interior tube 6620, which is connected to ambient air 6123.

The one needle structure shown in Figure 8a may be preferably implemented as shown more specifically in Figure 8b. An outer structure is provided, comprising a interior tube, having a larger diameter section at its proximal end, and a smaller diameter section at its distal end. The structure further comprises one opening 6623 to the section of large diameter, and one opening 6622 to the section of smaller diameter. A hollow tube having an outer diameter substantially matching the inner diameter of the distal end section of the outer structure, is inserted into the outer structure. The interference fit between the two parts at their distal sections makes sure that chamber 6624, which connects to outlet 6121, is hermetically sealed from chamber 6620, which connects to ambient air 6121.

The piercing means 6600 eliminate the risk of spilling liquids during a refill operation, and therefore provide for easy handling of the device 6600. The proposed single needle system has the further advantage that the bottle 6700 may be rotated along its axis even after it has been installed, provided that the single piercing means are installed centrally on said axis.

Most preferably, appropriate liquid conveying means 6026, 6034 are provided from the bottom of the sections 6120, 6130 of the described receiving chamber 6100, to the waste liquid collecting means 6082. This allows any liquids that may stagnate at the bottom of said receiving sections 6120, 6130 to be directed to the waste liquid collecting means 6082, and to keep said receiving sections 6120, 6130 clean.

The device according to the present invention comprises conveying means in order to convey the cleaning solution from the cleaning solution receiving means to the handpiece port's outlet that connect to the (A) and (W) connectors of a handpiece, and to the spray nozzles. As illustrated in Fig 6, further conveying means 6026 may be provided to convey cleaning solution from the cleaning solution receiving means to the waste liquid collecting means.

As shown in Fig 1, the device further comprises conveying means 1031 and 1032to convey the disinfecting solution from the disinfection solution receiving means to the handpiece port's outlet 1062 that connects to the (A) and (W) connectors of a handpiece, and to the spray nozzles.

Returning to Fig 6, further conveying means 6036 may be provided to convey disinfecting solution from the disinfecting solution receiving means to the waste liquid collecting means. As described above, in a preferred embodiment, ambient air conveying means 6123, 6133 are provided in order to compensate the pressure inside the supply bottles.

As shown in Fig 2, further oil conveying means 2091 may be provided to convey lubricating oil from the oil receiving means to the handpiece port's outlet 2063that connects to the (D) connector of a handpiece.

With reference to Fig 1, the device may still further comprise air conveying means 1041and 1042to convey compressed air from the compressed air supply connection port to the handpiece port's outlets connecting to the (A), (W) and (D) connectors of a handpiece, and to the spray nozzles.

Returning to Fig 6, further conveying means 6069 may be provided to convey air and solutions from the return (R) connector of a turbine handpiece to the waste liquid collecting means.

Each of the mentioned conveying means may comprise a combination of conduits, pumps and valves. Furthermore, each of the described conveying means may be implemented by separate circuits.

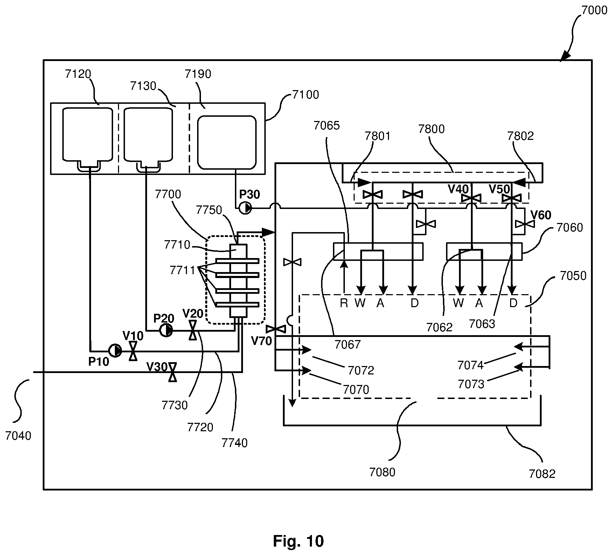

In a further embodiment shown in Figure 9, a combination of electrical pumps and solenoid valves is used, and some of the conduits, pumps and valves are shared by multiple circuits. The described system includes receiving means 6120, 6130, 6190 for a cleaning solution, a disinfecting solution and lubricating oil. It further comprises one regular handpiece port 6060 and one turbine handpiece port 6065, as well as four spray dispensing nozzles 6070, 6072, 6073, 6074. For the sake of clarity, the electrical motor 6800 is not shown in Figure 9 and 10. In what follows, unless otherwise stated, all pumps are switched off, and all valves are closed. Following the structure shown in Figure 9, the following actions may for example be implemented:
- To clean the interior of a handpiece connected to port 6060:
   ∘ Activate pump P1 to pump cleaning solution,
   ∘ Open valve V5 to provide compressed air,
   ∘ Open valve V1 to inject the pressurized cleaning solution into the (W) and (A) connectors of the handpiece,
   ∘ Open valve V3 to inject the pressurized cleaning solution into the (D) connector of the handpiece.
- To disinfect the interior of a handpiece connected to port 6060:
   ∘ Activate pump P2 to pump disinfecting solution,
   ∘ Open valve V5 to provide compressed air,
   ∘
   ∘ Open valve V1 to inject the pressurized disinfecting solution into the water (W) and air (A) connectors of the handpiece,
   ∘ Open valve V3 to inject the pressurized disinfecting solution into the internal drive (D) connector of the handpiece.
- To lubricate the interior of a handpiece connected to port 6060:
   ∘ Open valve V5 to provide compressed air,
   ∘ Activate pump P3 to pump lubricating oil,
   ∘ Open valve V3 to inject the pressurized oil into the drive (D) connector of the handpiece.
- To clean the interior of a turbine handpiece connected to port 6067:
   ∘ Activate pump P1 to pump cleaning solution,
   ∘ Open valve V5 to provide compressed air,
   ∘ Open valve V2 to inject the pressurized cleaning solution into the (W) and (A) connectors of the handpiece,
   ∘ Open valve V4 to inject the pressurized cleaning solution into the (D) connector of the handpiece.
- To disinfect the interior of a turbine handpiece connected to port 6067:
   ∘ Activate pump P2 to pump disinfecting solution,
   ∘ Open valve V5 to provide compressed air,
   ∘ Open valve V2 to inject the pressurized disinfecting solution into the water (W) and air (A) connectors of the handpiece,
   ∘ Open valve V4 to inject the pressurized disinfecting solution into the internal drive (D) connector of the handpiece.
- To lubricate the interior of a turbine handpiece connected to port 6067:
   ∘ Open valve V5 to provide compressed air,
   ∘ Activate pump P4 to pump lubricating oil,
   ∘ Open valve V4 to inject the pressurized pressurized oil into the drive (D) connector of the handpiece.
- To clean or to disinfect the exterior faces of handpieces:
   ∘ Activate pump P1 to pump cleaning solution, or pump P2 to pump disinfecting solution,
   ∘ Open valve V5 to provide compressed air,
   ∘ Open valve V7 to route the pressurized cleaning solution through the spray nozzles 6070, 6072, 6073, 6074 into the interior of the treatment chamber 6050.

During any of the above cycles, the electrical motor 6800 may set the internal gear drives of connected handpieces into motion. For turbine handpieces, this is done using compressed air.

Any waste liquids from within the treatment chamber 6050 are evacuated towards the waste liquid collecting means 6082 through the outlet 6080.

If valve V6 is opened, liquid and air present in the turbine handpiece is evacuated towards the waste liquid collecting means 6082.

It will also be appreciated that if in any of the above steps, none of the pumps are activated, the steps will route compressed air directly to the respective outlets or spray nozzles.

The device according to the present invention may preferably comprise non-depicted programmable controlling means and storage means, which are arranged to switch the pumps and valves on or off following a programmed schedule. The controlling means may further be interfaced with the sensors for detecting a low level of liquid in the supply bottles, the fullness of the liquid collecting means, the presence of the liquid collecting means, and the closed state of the treatment chamber's door. Only once all sensors provide signals indicating the appropriate states for using the device, will a control sequence be selectable by a user through a user interface 6200. The sequence of scheduled events allows for programming different cleaning, disinfecting and lubricating sequences, which may be stored for later use in the storage means. Once a sequence is activated by the user through the interface 6200, the controlling means set the device into an initial state and step through the programmed events one by one, effectively implementing an automatic cleaning, disinfecting and lubricating protocol for the connected handpieces.

In a preferred embodiment, at least three programs may be preprogrammed and stored on the device's storage means. The programs may comprise a complete program including cleaning, disinfecting and lubrication, a partial programme including cleaning and lubrication, and a simple lubrication programme.

Yet a further preferred embodiment is shown in Figure 10. A different combination of electrical pumps and solenoid valves is used, and some of the conduits, pumps and valves are shared by multiple circuits. The described system includes receiving means 7120, 7130, 7190 for a cleaning solution, a disinfecting solution and lubricating oil. It further comprises, by way of example and without loss of generality, one regular handpiece port 7060 and one turbine handpiece port 7067, as well as four spray dispensing nozzles 7070, 7072, 7073, 7074. For the sake of clarity, the electrical motor 7800, as well as any elements that are similar to the ones shown in Figure 9, are not shown in Figure 10.

A dosing chamber 7700 is arranged on the path leading from the respective receiving means 7120, 7130, 7190 to the respective handpiece ports 7050, 7065. The dosing chamber is located downstream of the receiving means, and upstream of the handpiece ports. The dosing chamber preferably comprises at least one recipient 7710 as well as at least one sensing means 7711.

If a single recipient 7710 is provided, it may be provided by a tube made of a translucent material, and preferably provides a set of connections:
- a connection 7720, which allows the cleaning solution to be pumped into the tube,
- a connection 7730, which allows the disinfecting solution to be pumped into the tube, and
- a connection 7740, which allows compressed air to be injected into the tube.

The 7710 tube may preferably be installed in a substantially vertical position. The at least one sensing means 7711 may preferably be optical sensing means. They are preferably arranged at different heights along the tube 7710. The optical sensing means are capable of detecting if the tube is filled with liquid at the height they are monitoring, or not. This signal is then fed to the controlling means, and allows to effectively dose the liquid (cleaning or disinfecting solution) that is being pumped from the respective receiving means. Once the desired height of liquid has been pumped into the tube, the dosage is adequate. The content of the tube 7710 is flushed through the tube's outlet 7750 by injecting compressed air through the corresponding inlet 7740. By doing this, the measured and preprogrammed dose of cleaning or disinfecting solution is conveyed to the appropriate outlets or spray nozzles.

The dosing chamber 7700 may also comprise several tubular recipients, wherein each one is fed by either the cleaning solution and/or the disinfecting solution. The sensing means may be arranged at different heights along the different tubes, so as to provide different dosing increments or scales on the different tubes.

The access of the dosed solution to the (W), (A) and (D) port is regulated by at least one, but preferably several valves that are arranged on the respective conveying means. The valves are preferably provided in a serial arrangement, and are arranged downstream of the dosing chamber, and upstream of the handpiece ports. As depicted in Fig 10, a valve block 7800 may preferably group these valves together. The disinfecting solution, cleaning solution, or air is injected into said valve block through at least one, but preferably two inlets 7801, 7802. The valve block provides outlets to the (W), (A) and (D) ports on each handpiece port. Preferably, said inlets 7801, 7802 are located on either side of the serial valve arrangement. This allows for precise guiding of the dosed solution to any of the handpiece ports.

In what follows, unless otherwise stated, all pumps are switched off, and all valves are closed. Following the structure shown in Figure 10, the following actions may for example be implemented:
- To clean the interior of a handpiece connected to port 7060:
   ∘ Activate pump P10 and open valve V10 to pump cleaning solution,
   ∘ Shut down pump P10 and close valve V10 once the sensor means 7711 have detected the needed level of cleaning solution inside the tube 7710.
   ∘ Open valve V30 to provide compressed air,
   ∘ Open valve V40 to inject the pressurized cleaning solution into the (W) and (A) connectors of the handpiece,
   ∘ Open valve V50 to inject the pressurized cleaning solution into the (D) connector of the handpiece.
- To disinfect the interior of a handpiece connected to port 7060:
   ∘ Activate pump P20 and open valve V20 to pump disinfecting solution,
   ∘ Shut down pump P20 and close valve V20 once the sensor means 7711 have detected the needed level of disinfecting solution inside the tube 7710.
   ∘ Open valve V30 to provide compressed air,
   ∘ Open valve V40 to inject the pressurized disinfecting solution into the water (W) and air (A) connectors of the handpiece,
   ∘ Open valve V50 to inject the pressurized disinfecting solution into the internal drive (D) connector of the handpiece.
- To lubricate the interior of a handpiece connected to port 7060:
   ∘ Open valve V30 to provide compressed air,
   ∘ Activate pump P30 to pump lubricating oil,
   ∘ Open valve V70 to inject the pressurized oil into the drive (D) connector of the handpiece.
- To clean or to disinfect the exterior faces of handpieces:
   ∘ Activate pump P10 and open valve V10 to pump cleaning solution, or activate pump P20 and open valve V20 to pump disinfecting solution,
   ∘ Shut down the activated pump and close the opened valve once the sensor means 7711 have detected the needed level of disinfecting or cleaning solution inside the tube 7710.
   ∘ Open valve V30 to provide compressed air,
   ∘ Open valve V70 to route the pressurized cleaning solution through the spray nozzles 7070, 7072, 7073, 7074 into the interior of the treatment chamber 7050.

In case the sensing means 7711 never (or, in practice, after a timed period) detect the needed level of disinfecting or cleaning solution inside the tube 7710, the controlling means may conclude that the respective supply has run empty and needs to be changed or refilled.

The described dosing chamber allows for higher precision and repeatability in the delivery of the wanted amount of liquid.

During any of the above cycles, the electrical motor 7800 may set the internal gear drives of connected handpieces into motion. For turbine handpieces, this is done using compressed air.

Any waste liquids from within the treatment chamber 7050 are evacuated towards the waste liquid collecting means 7082 through the outlet 7080.

It will also be appreciated that if in any of the above steps, none of the pumps are activated, the steps will route compressed air directly to the respective outlets or spray nozzles.

A number of laboratory tests have shown that a preferred cleaning solution comprises a mixture of propylene glycol, parabens, biguanides and complexing agents in acqueous solution. A preferred disinfecting solution comprises 30 to 50 weight-% of ethanol and 5 to 15 weight-% of isopropanol with nonhazardous additions in aqueous solution.

Further tests have shown that an efficient cleaning protocol comprises a four-fold repetition of the following set of steps for each handpiece, wherein the internal cleaning of the handpieces may be either sequential or simultaneous for each handpiece:
1) internal purge of the handpiece by compressed air
2) purge of the spray nozzles by compressed air
3) injection of the pressurized cleaning solution into the handpiece: 0.86 cm³
   - 0.315 cm³ are injected into the interior through the (A) and (W) connectors
   - 0.547 cm³ are injected into the internal drive through the (D) connector
4) external surface treatment by injecting 0.83 cm³ into the chamber through the spray nozzles
5) time for the cleaning solution to act: 37s
6) internal purge of the handpiece by compressed air
7) purge of the spray nozzles by compressed air

It has in particular been noted that the repeated action of the preferred cleaning solution, in combination with the mechanical action applied on the stains through the compressed air treatment, allows for the efficient removal of biofilms from both the internal and external surfaces of the treated handpieces. The use of the sprayed mist allows for cleaning the external surfaces thoroughly and uniformly.

Further tests have shown that an efficient disinfecting protocol comprises a single application of the following set of steps for each handpiece. Most preferably, the above cleaning protocol is followed by an additional purge by compressed air, and by the following disinfecting protocol, wherein the internal disinfecting of the handpieces may be either sequential or simultaneous for each handpiece:
1) injection of pressurized disinfecting solution into the handpiece: 2.075 cm³:
   - 0.83 cm³ are injected into the interior through the (A) and (W) connectors
   - 1.245 cm³ are injected into the internal drive through the (D) connector
2) external surface treatment by applying the disinfecting solution through the spray nozzles: 3.32 cm³ are injected into the treatment chamber
3) time for the disinfecting solution to act: 120s
4) internal purge of the handpiece by compressed air
5) purge of the spray nozzles by compressed air

It has been noted that the above protocol, in combination with the cleaning protocol, efficiently clears the treated handpieces both internally and externally from biofilms, bacteria, funghis and yealsts (candida albicans, staphylococcus aureus, enterococcus hirae and pseudomonas aeruginos), viruses (HIV, hepatitis and also adeno viruses).

A lubricating cycle, during which lubricating oil, pressurized by compressed air, is injected into the internal gear drive of a handpiece, may follow the above cleaning and the combined cleaning-disinfecting protocols in order to guarantee the proper maintenance of the handpieces.

The proposed device and method of operating it allows a dentist to effectively eliminate biofilms, bacteria and viruses from both the interior and exterior surfaces of handpieces and turbine handpieces. As explained, the device may be used to implement a proven protocol involving efficient cleaning and disinfecting solutions. Due to the described placement of spray dispensing nozzles in the treatment chamber, small quantities of the respective solutions yield a good result. As the small quantities of solutions may be rinsed by compressed air, the device does not need to be supplied with demineralized water for rinsing, nor does it have to be connected to a sewer drain. Indeed, the quantities of waste liquid are small enough to be collected by an internal waste liquid collecting drawer. This allows for easy integration of the device into the existing working environment of a dentist's practice.

In a preferred embodiment of device, two regular handpieces and two turbine handpieces may be cleaned, disinfected and lubricated in a total cycle time of about eight minutes, which makes the proposed device attractive for use in between the treatment of two patients, thereby decreasing the risk of cross-contaminating patients, as well as dentists.

The foregoing embodiments have been described for illustration purposes only and without the intention of limiting the scope of the claimed invention. The skilled person is able to adapt the described system to specific needs, notably by changing the number of handpiece ports or spray nozzles, or by modifying the circuitry or conveying means.

No doubt many other effective alternatives will occur to the skilled person. It will be understood that the invention is not limited to the described embodiments and encompasses modifications apparent to those skilled in the art lying within the scope of the claims appended hereto.

## Claims

1. A device ( 2000; 3000; 4000; 5000; 6000; 7000) for cleaning and disinfecting at least one dental handpiece both internally and externally, the device comprising means for receiving a cleaning solution ( 2020; 3020; 4020; 5020; 6020; 7020), and means for receiving a disinfecting solution (2030; 3030; 4030; 5030; 6030; 7030), a port (2040; 3040; 4040; 5040; 6040; 7040) for connecting a compressed air supply, a treatment chamber (2050; 3050; 4050; 5050; 6050; 7050), said treatment chamber comprising at least one handpiece port (2060; 3060; 4060; 5060; 6060; 7070) for connecting a dental handpiece, said at least one handpiece port having an axis (2061; 3061; 4061; 5061; 6061; 7061) and comprising at least one outlet ( 2062; 3062; 4062; 5062; 6062; 7062) for cleaning and disinfecting the internal structure of a dental handpiece, the treatment chamber further comprising at least one spray dispensing nozzle ( 2070; 3070; 4070; 5070; 6070; 7070) for cleaning and disinfecting the external faces of a dental handpiece, said nozzle having an axis ( 2071; 3071; 4071; 5071; 6071; 7071), the treatment chamber further comprising at least one waste liquid outlet ( 2080; 3080; 4080; 5080; 6080; 7080), wherein the device comprises conveying means for conveying said cleaning solution from said receiving means to said at least one handpiece port ( 2021; 3021; 4021; 5021; 6021; 7021) and to said at least one spray dispensing nozzle ( 2022; 3022; 4022; 5022; 6022; 7022), to convey said disinfecting solution from said receiving means to said at least one handpiece port ( 2031; 3031; 4031; 5031; 6031; 7031) and to said at least one spray dispensing nozzle (2032; 3032; 4032; 5032; 6032; 7032), and to convey said compressed air from said port (2040; 3040; 4040; 5040; 6040; 7040) to said at least one handpiece port (2041; 3041; 4041; 5041; 6041; 7041) and to said at least one spray nozzle (2042; 3042; 4042; 5042; 6042, 7042), wherein the orientation of the axis ( 2061; 3061; 4061; 5061; 6061; 7061) of the at least one handpiece port is not substantially collinear with the orientation of the axis ( 2071; 3072; 4072; 5072; 6072; 7072) of said at least one spray dispensing nozzle, **characterized in that** the device comprises an electrical motor (2800; 3800; 4800; 5800; 6800; 7800), which is operatively arranged to set the internal drive of a handpiece that is connected to the at least one handpiece port ( 2021; 3021; 4021; 5021; 6021; 7021) into motion.

2. The device according to claim 1, wherein the device further comprises at least one dosing means (7700) for dosing the amount of disinfecting and cleaning solution that is conveyed from said receiving means to said at least one handpiece port
wherein said dosing means comprises at least one tube (7710) arranged substantially vertically,
wherein the dosing means (7700) further comprises at least one sensing means (7711) for detecting the level of liquid inside said at least one tube (7710).

3. The device according to claim 1 or claim 2 wherein the device further comprises means (2090; 3090; 4090; 5090; 6090; 7090) for receiving lubricating oil, and wherein each handpiece port (2060; 3060; 4060; 5060; 6060; 7060) comprises at least a second outlet (2063; 3063; 4063; 5063; 6063; 7063) for cleaning, disinfecting and lubricating the internal drive of a dental handpiece, the device comprising conveying means (2091; 3091; 4091; 5091; 6091; 7091) for conveying said lubricating oil to said second handpiece port outlet.

4. The device according to any of the preceding claims, wherein the device further comprises waste liquid collecting means (3081), said waste liquid collecting means being arranged to collect waste liquids from the treatment chamber (3050) through said at least one chamber outlet (3080),
wherein the waste liquid collecting means comprises a removable trough (4082; 5082; 6082).

5. A device according to any of the preceding claims, wherein said means for receiving a cleaning solution ( 2020; 3020; 4020; 5020; 6020), a disinfecting solution (1030; 2030; 3030; 4030; 5030; 6030) and lubricating oil (2090; 3090; 4090; 5090; 6090), comprise a receiving chamber (5100; 6100), including sections for respectively receiving a cleaning solution (5120; 6120), a disinfecting solution (5130; 6130) and lubricating oil (5190; 6190), each section further comprising at least one outlet (5121,5131;5191; 6121,6131,6191),
wherein the device comprises liquid conveying means (6026,6034) connecting the at least one outlet (6121,6131) of each of said receiving chamber sections (6120,6130) to said waste liquid collecting means (6082).

6. The device according to any of claims 3 to 5, wherein the device further comprises controlling means (6400) that are operable for selectively enabling the supply, and controlling the amount, of said cleaning solution, disinfecting solution, lubricating oil and compressed air that is conveyed to said at least two handpiece port outlets, and to said at least one spray nozzle,
wherein said controlling means (6400) is programmable means,
wherein at least one of the receiving sections (6120,6130) of said receiving chamber (6100) comprises means (6122,6132) for receiving a supply container,
wherein at least one receiving section (6120,6130) comprises means (6600) for piercing said supply containers,
wherein said piercing means (6600) comprises two substantially vertical electrodes (6610,6611) of different lengths, wherein each electrode comprises an opening (6612,6613) leading into a hollow tube, and wherein the longer electrode (6610) comprises an electrically insulating material (6614) on its outer surface,
wherein said piercing means (6600) comprises two substantially vertical and concentric tubes (6620,6621), the outer tube (6621) having a larger diameter than the inner tube (6620), so that a chamber of annular section (6624) is formed between the two tubes, wherein the piercing means comprises at least one opening leading into the inner tube (6622), and at least one opening leading into said annular chamber (6623), further
wherein the piercing means (6600) comprises an outer tube (6625) comprising a distal end section (6627) having a smaller diameter than a proximal end section (6628), wherein the outer tube (6625) comprises at least one opening (6622) leading into the distal end section (6627) and at least one opening (6623) leading into the proximal end section (6628), and wherein an inner tube (6626) of exterior diameter substantially matching the inner diameter of said distal end section (6627), is sealingly inserted into the outer tube (6625).

7. The device according to any of the preceding claims, wherein the cleaning solution comprises a mixture of propylene glycol, parabens, biguanides and complexing agents in aqueous solution, wherein the disinfecting solution comprises 30 to 50 weight-% of ethanol and 5 to 15 weight-% of isopropanol with nonhazardous additions in aqueous solution, wherein the treatment chamber comprise a removable door (6300).

8. A method of cleaning and disinfecting at least one dental handpiece, wherein a cleaning solution and a disinfecting solution are selectively injected into the interior body of said at least one handpiece, and said cleaning solution and disinfecting solution are selectively sprayed onto the exterior faces of said handpiece following a direction, which is not substantially collinear with an orientation of the axis of the at least one handpiece, **characterised in that** the method further comprises setting the internal drive of a handpiece that is connected to at least one handpiece part into motion with an electric motor.

9. The method of claim 8, wherein the cleaning solution comprises a mixture of propylene glycol, parabens, biguanides and complexing agents in aqueous solution,
wherein the disinfecting solution comprises 30 to 50 weight-% of ethanol and 5 to 15 weight-% of isopropanol with nonhazardous additions in aqueous solution,
wherein 0.83 cm3 of the cleaning solution is injected into the treatment chamber through the at least one spray nozzle, and wherein 0.86 cm3 of the cleaning solution is injected into the interior of each dental handpiece, and wherein the solution is allowed to act on the material during 37s before being rinsed with compressed air, which is repeated four times consecutively.

10. The method of claim 9, wherein the method further comprises injecting 3.32 cm³ of the disinfecting solution into the treatment chamber through the at least one spray nozzle, and wherein 2.075 cm³ of the disinfecting solution are injected into the interior of each dental handpiece, and wherein the solution is allowed to act on the material during 120s before being rinsed with compressed air.

11. The method of any of claims 8 to 10, wherein the method further comprises injecting lubricating oil into the internal drive of each dental handpiece.

12. A method of operating the device according to any of claims 1 to 7, wherein at least one handpiece is attached to the at least one handpiece port, and wherein 0.83 cm³ of the cleaning solution are injected into the treatment chamber through the at least one spray nozzle, and wherein 0.86 cc of the cleaning solution are injected into the interior of each dental handpiece through said at least one handpiece port outlet, and wherein the solution is allowed to act on the material during 37s before being rinsed with compressed air conveyed through said at least one handpiece port outlet and said at least one spray nozzle.

13. The method of claim 12, wherein the method further comprises spraying 3.32 cm³ of the disinfecting solution into the treatment chamber through said at least one spray nozzle, and wherein 2.075 cm³ of the disinfecting solution are injected into the interior of each dental handpiece through said at least one handpiece port outlet, and wherein the disinfecting solution is allowed to act on the material during 120s before being rinsed with compressed air conveyed through said at least one handpiece port outlet and said at least one spray nozzle.

14. The method of claim 12 or 13, wherein the method further comprises injecting lubricating oil into the internal drive of the at least one dental handpiece through the second handpiece port outlet.

## Patentansprüche

1. Vorrichtung 2000; 3000; 4000; 5000; 6000; 7000) zum Reinigen und Desinfizieren wenigstens eines Dentalhandstücks sowohl innen als auch außen, wobei die Vorrichtung ein Mittel zum Aufnehmen einer Reinigungslösung (2020; 3020; 4020; 5020; 6020; 7020) und ein Mittel zum Aufnehmen einer Desinfektionslösung (2030; 3030; 4030; 5030; 6030; 7030), einen Anschluss (2040; 3040; 4040; 5040; 6040; 7040) zum Verbinden einer Druckluftzufuhr, eine Behandlungskammer (2050; 3050; 4050; 5050; 6050; 7050) umfasst, wobei die Behandlungskammer wenigstens einen Handstückanschluss (2060; 3060; 4060; 5060; 6060; 7060) zum Verbinden eines Dentalhandstücks umfasst, wobei der wenigstens eine Handstückanschluss eine Achse (2061; 3061; 4061; 5061; 6061; 7061) hat und wenigstens einen Auslass (2062; 3062; 4062; 5062; 6062; 7062) zum Reinigen und Desinfizieren der inneren Struktur eines Dentalhandstücks umfasst, wobei die Behandlungskammer ferner wenigstens eine Sprühnebel-Abgabedüse (2070; 3070; 4070; 5070; 6070; 7070) zum Reinigen und Desinfizieren der äußeren Flächen eines Dentalhandstücks umfasst, wobei die Düse eine Achse (2071; 3071; 4071; 5071; 6071; 7071) hat, wobei die Behandlungskammer ferner wenigstens einen Schmutzflüssigkeit-Auslass (2080; 3080; 4080; 5080; 6080; 7080) umfasst, wobei die Vorrichtung ein Beförderungsmittel zum Befördern der Reinigungslösung von dem Aufnahmemittel zu dem wenigstens einen Handstückanschluss (2021; 3021; 4021; 5021; 6021; 7021) und zu der wenigstens einen Sprühnebel-Abgabedüse (2022; 3022; 4022; 5022; 6022; 7022), um die Desinfektionslösung von dem Aufnahmemittel zu dem wenigstens einen Handstückanschluss (2031; 3031; 4031; 5031; 6031; 7031) und zu der wenigstens einen Sprühnebel-Abgabedüse (2032; 3032; 4032; 5032; 6032; 7022) zu befördern und um die Druckluft von dem Anschluss (2040; 3040; 4040; 5040; 6040; 7040) zu dem wenigstens einen Handstückanschluss (2041; 3041; 4041; 5041; 6041; 7041) und zu der wenigstens einen Sprühdüse (2042; 3042; 4042; 5042; 6042; 7042) zu befördern,
wobei die Ausrichtung der Achse (2061; 3061; 4061; 5061; 6061; 7061) des wenigstens einen Handstückanschlusses nicht im Wesentlichen kollinear mit der Ausrichtung der Achse (2071; 3071; 4071; 5071; 6071; 7071) der wenigstens einen Sprühnebel-Abgabedüse ist,
**dadurch gekennzeichnet, dass** die Vorrichtung einen Elektromotor (2800; 3800; 4800; 5800; 6800; 7800) umfasst, der funktionsfähig angeordnet ist, um den inneren Antrieb eines Handstücks, das mit dem wenigstens einen Handstückanschluss (2021; 3021; 4021; 5021; 6021; 7021) verbunden ist, in Bewegung zu setzen.

2. Vorrichtung nach Anspruch 1, wobei die Vorrichtung ferner wenigstens ein Dosierungsmittel (7700) zum Dosieren von Desinfektions- und Reinigungslösung, die von dem Aufnahmemittel zu dem wenigstens einen Handstückanschluss befördert werden, umfasst,
wobei das Dosierungsmittel wenigstens eine Röhre (7710), die im Wesentlichen vertikal angeordnet ist, umfasst,
wobei das Dosierungsmittel (7700) ferner wenigstens ein Abfühlmittel (7711) zum Erfassen des Flüssigkeitspegels innerhalb der wenigstens einen Röhre (7710) umfasst.

3. Vorrichtung nach Anspruch 1 oder Anspruch 2, wobei die Vorrichtung ferner ein Mittel (2090; 3090; 4090; 5090; 6090; 7090) zum Aufnehmen von Schmieröl umfasst und wobei jeder Handstückanschluss (2060; 3060; 4060; 5060; 6060; 7060) wenigstens einen zweiten Auslass (2063; 3063; 4063; 5063; 6063; 7063) zum Reinigen, Desinfizieren und Schmieren des inneren Antriebs eines Dentalhandstücks umfasst, wobei die Vorrichtung ein Mittel (2091; 3091; 4091; 5091; 6091; 7091) zum Befördern des Schmieröls zu dem zweiten Auslass des Handstückanschlusses umfasst.

4. Vorrichtung nach einem der vorhergehenden Ansprüche, wobei die Vorrichtung ferner ein Schmutzflüssigkeit-Sammelmittel (3081) umfasst, wobei das Schmutzflüssigkeit-Sammelmittel dafür angeordnet ist, Schmutzflüssigkeiten aus der Behandlungskammer (3050) durch den wenigstens einen Kammerauslass (3080) zu sammeln,
wobei das Schmutzflüssigkeit-Sammelmittel eine entfernbare Wanne (4082; 5082; 6082) umfasst.

5. Vorrichtung nach einem der vorhergehenden Ansprüche, wobei das Mittel zum Aufnehmen einer Reinigungslösung (2020; 3020; 4020; 5020; 6020), einer Desinfektionslösung (1030; 2030; 3030; 4030; 5030; 6030) und von Schmieröl (2090; 3090; 4090; 5090; 6090) eine Aufnahmekammer (5100; 6100) umfassen, die Abschnitte zum jeweiligen Aufnehmen einer Reinigungslösung (5120; 6120), einer Desinfektionslösung (5130; 6130) und von Schmieröl (5190; 6190) umfassen, wobei jeder Abschnitt ferner wenigstens einen Auslass (5121, 5131; 5191; 6121, 6131, 6191) umfasst,
wobei die Vorrichtung ein Flüssigkeitsbeförderungsmittel (6026, 6034) umfasst, das den wenigstens einen Auslass (6121, 6131) jedes Aufnahmekammerabschnitts (6120, 6130) mit dem Schmutzflüssigkeit-Sammelmittel (6082) verbindet.

6. Vorrichtung nach einem der Ansprüche 3 bis 5, wobei die Vorrichtung ferner ein Steuerungsmittel (6400) umfasst, die funktionsfähig ist zum selektiven Ermöglichen der Zufuhr und Steuern der Menge der Reinigungslösung, der Desinfektionslösung, des Schmieröls und der Druckluft, die zu den wenigstens zwei Auslässen des Handstückanschlusses und zu der wenigstens einen Sprühdüse befördert werden,
wobei das Steuerungsmittel (6400) ein programmierbares Mittel ist,
wobei wenigstens einer der Aufnahmeabschnitte (6120. 6130) der Aufnahmekammer (6100) ein Mittel (6122, 6132) zum Aufnehmen eines Zuführbehälters umfasst,
wobei wenigstens einer der Aufnahmeabschnitte (6120, 6130) der Aufnahmekammer (6100) ein Mittel (6600) zum Durchstechen der Zufuhrbehälter umfasst,
wobei das Durchstechmittel (6600) zwei im Wesentlichen vertikale Elektroden (6610, 6611) unterschiedlicher Längen umfasst, wobei jede Elektrode eine Öffnung (6612, 6613) umfasst, die in eine hohle Röhre führen, und wobei die längere Elektrode (6610) ein elektrisch isolierendes Material (6614) auf ihrer Außenfläche umfasst,
wobei das Durchstechmittel (6600) zwei im Wesentlichen vertikale und konzentrische Röhren (6620, 6621) umfasst, wobei die äußere Röhre (6621) einen größeren Durchmesser hat als die innere Röhre (6620), so dass eine Kammer mit ringförmigem Schnitt (6624) zwischen den zwei Röhren geformt wird, wobei das Durchstechmittel wenigstens eine Öffnung, die in die innere Röhre (6622) führt, und wenigstens eine Öffnung, die in die ringförmige Kammer (6623) führt, umfasst, ferner
wobei das Durchstechmittel (6600) eine äußere Röhre (6625) umfasst, die einen distalen Endabschnitt (6627) umfasst, der einen kleineren Durchmesser hat als ein proximaler Endabschnitt (6628), wobei die äußere Röhre (6625) wenigstens eine Öffnung (6622) umfasst, die in den proximalen Endabschnitt (6628) führt, und wobei eine innere Röhre (6626) mit einem Außendurchmesser, der im Wesentlichen dem Innendurchmesser des distalen Endabschnitts (6627) entspricht, abdichtend in die äußere Röhre (6625) eingesetzt ist.

7. Vorrichtung nach einem der vorhergehenden Ansprüche, wobei die Reinigungslösung ein Gemisch von Propylenglykol, Parabenen, Biguaniden und Komplexbildnern in wässriger Lösung umfasst, wobei die Desinfektionslösung 30 bis 50 Gewichts-% an Ethanol und 5 bis 15 Gewichts-% an Isopropanol mit ungefährlichen Zusätzen in wässriger Lösung umfasst, wobei die Behandlungskammer eine entfernbare Tür (6300) umfasst.

8. Verfahren zum Reinigen und Desinfizieren wenigstens eines Dentalhandstücks, wobei eine Reinigungslösung und eine Desinfektionslösung selektiv in den inneren Körper des wenigstens einen Handstücks injiziert werden und die Reinigungslösung und die Desinfektionslösung selektiv auf die äußeren Flächen des Handstücks gesprüht werden, einer Richtung folgend, die nicht im Wesentlichen kollinear mit einer Ausrichtung der Achse des wenigstens einen Handstücks ist,
**dadurch gekennzeichnet, dass**
das Verfahren ferner das In-Bewegung-Setzen des inneren Antriebs eines Handstücks, das mit wenigstens einem Handstückteil verbunden ist, mit einem Elektromotor umfasst.

9. Verfahren nach Anspruch 8, wobei die Reinigungslösung ein Gemisch von Propylenglykol, Parabenen, Biguaniden und Komplexbildnern in wässriger Lösung umfasst,
wobei die Desinfektionslösung 30 bis 50 Gewichts-% an Ethanol und 5 bis 15 Gewichts-% an Isopropanol mit ungefährlichen Zusätzen in wässriger Lösung umfasst,
wobei 0,83 cm³ der Reinigungslösung durch die wenigstens eine Sprühdüse in die Behandlungskammer injiziert werden und wobei 0,86 cm³ der Reinigungslösung in das Innere jedes Dentalhandstücks injiziert werden und wobei ermöglicht wird, dass die Lösung während 37 s auf das Material einwirkt, bevor mit Druckluft gespült wird, was viermal nacheinander wiederholt wird.

10. Verfahren nach Anspruch 9, wobei das Verfahren ferner das Injizieren von 3,32 cm³ der Desinfektionslösung durch die wenigstens eine Sprühdüse in die Behandlungskammer umfasst und wobei 2,075 cm³ der Desinfektionslösung in das Innere jedes Dentalhandstücks injiziert werden und wobei ermöglicht wird, dass die Lösung während 120 s auf das Material einwirkt, bevor mit Druckluft gespült wird.

11. Verfahren nach einem der Ansprüche 8 bis 10, wobei das Verfahren ferner das Injizieren von Schmieröl in den inneren Antrieb jedes Dentalhandstücks umfasst.

12. Verfahren zum Betreiben der Vorrichtung nach einem der Ansprüche 1 bis 7, wobei wenigstens ein Handstück an dem wenigstens einen Handstückanschluss befestigt wird und wobei 0,83 cm³ der Reinigungslösung durch die wenigstens eine Sprühdüse in die Behandlungskammer injiziert werden und wobei 0,86 cm³ der Reinigungslösung durch den wenigstens einen Auslass des Handstückanschlusses in das Innere jedes Dentalhandstücks injiziert werden und wobei ermöglicht wird, dass die Lösung während 37 s auf das Material einwirkt, bevor mit Druckluft gespült wird, die durch den wenigstens einen Auslass des Handstückanschlusses und die wenigstens eine Sprühdüse befördert wird.

13. Verfahren nach Anspruch 12, wobei das Verfahren ferner das Injizieren von 3,32 cm³ der Desinfektionslösung durch die wenigstens eine Sprühdüse in die Behandlungskammer umfasst und wobei 2,075 cm³ der Desinfektionslösung durch den wenigstens einen Auslass des Handstückanschlusses in das Innere jedes Dentalhandstücks injiziert werden und wobei ermöglicht wird, dass die Desinfektionslösung während 120 s auf das Material einwirkt, bevor mit Druckluft gespült wird, die durch den wenigstens einen Auslass des Handstückanschlusses und die wenigstens eine Sprühdüse befördert wird.

14. Verfahren nach Anspruch 12 oder 13, wobei das Verfahren ferner das Injizieren von Schmieröl in den inneren Antrieb des wenigstens einen Dentalhandstücks durch den zweiten Auslass des Handstückanschlusses umfasst.

## Revendications

1. Dispositif (2000 ; 3000 ; 4000 ; 5000 ; 6000 ; 7000) de nettoyage et de désinfection d'au moins une pièce à main dentaire de manière interne et de manière externe, le dispositif comprenant un moyen de réception d'une solution de nettoyage (2020 ; 3020 ; 4020 ; 5020 ; 6020 ; 7020), et un moyen de réception d'une solution désinfectante (2030 ; 3030 ; 4030 ; 5030 ; 6030 ; 7030), un raccord (2040 ; 3040 ; 4040 ; 5040 ; 6040 ; 7040) permettant de raccorder un approvisionnent en air comprimé, une chambre de traitement (2050 ; 3050 ; 4050 ; 5050 ; 6050 ; 7050), ladite chambre de traitement comprenant au moins un raccord pour pièce à main (2060 ; 3060 ; 4060 ; 5060 ; 6060 ; 7070) permettant de raccorder une pièce à main dentaire, ledit au moins un raccord pour pièce à main présentant un axe (2061 ; 3061 ; 4061 ; 5061 ; 6061 ; 7061) et comprenant au moins une sortie (2062 ; 3062 ; 4062 ; 5062 ; 6062 ; 7062) permettant de nettoyer et désinfecter la structure interne d'une pièce à main dentaire, la chambre de traitement comprenant en outre au moins une buse de pulvérisation (2070 ; 3070 ; 4070 ; 5070 ; 6070 ; 7070) permettant de nettoyer et désinfecter les faces externes d'une pièce à main dentaire, ladite buse présentant un axe (2071 ; 3071 ; 4071 ; 5071 ; 6071 ; 7071), la chambre de traitement comprenant en outre au moins une sortie de liquide résiduaire (2080 ; 3080 ; 4080 ; 5080 ; 6080 ; 7080), dans lequel le dispositif comprend un moyen d'acheminement permettant d'acheminer ladite solution de nettoyage à partir dudit moyen de réception vers ledit au moins un raccord pour pièce à main (2021 ; 3021 ; 4021 ; 5021 ; 6021 ; 7021) et vers ladite au moins une buse de pulvérisation (2022 ; 3022 ; 4022 ; 5022 ; 6022 ; 7022), afin d'acheminer ladite solution désinfectante à partir dudit moyen de réception vers ledit au moins un raccord pour pièce à main (2031 ; 3031 ; 4031 ; 5031 ; 6031 ; 7031) et vers ladite au moins une buse de pulvérisation (2032 ; 3032 ; 4032 ; 5032 ; 6032 ; 7032), et pour acheminer ledit air comprimé à partir dudit raccord (2040 ; 3040 ; 4040 ; 5040 ; 6040 ; 7040) vers ledit au moins un raccord pour pièce à main (2041 ; 3041 ; 4041 ; 5041 ; 6041 ; 7041) et vers ladite au moins une buse de pulvérisation (2042 ; 3042 ; 4042 ; 5042 ; 6042 ; 7042),
dans lequel l'orientation de l'axe (2061 ; 3061 ; 4061 ; 5061 ; 6061 ; 7061) du au moins un raccord pour pièce à main n'est pas essentiellement colinéaire avec l'orientation de l'axe (2071 ; 3072 ; 4072 ; 5072 ; 6072 ; 7072) de ladite au moins une buse de pulvérisation,
**caractérisé en ce que** le dispositif comprend un moteur électrique (2800 ; 3800 ; 4800 ; 5800 ; 6800 ; 7800), qui est agencé de manière fonctionnelle pour mettre en mouvement l'entraînement interne d'une pièce à main qui est raccordée au au moins un raccord pour pièce à main (2021 ; 3021 ; 4021 ; 5021 ; 6021 ; 7021).

2. Dispositif selon la revendication 1, dans lequel le dispositif comprend en outre au moins un moyen de dosage (7700) permettant de doser la quantité de solution désinfectante et de nettoyage qui est acheminée à partir dudit moyen de réception vers ledit au moins un raccord pour pièce à main
dans lequel ledit moyen de dosage comprend au moins un tube (7710) agencé de manière essentiellement verticale,
dans lequel le moyen de dosage (7700) comprend en outre au moins un moyen de détection (7711) permettant de détecter le niveau de liquide à l'intérieur dudit au moins un tube (7710).

3. Dispositif selon la revendication 1 ou 2, dans lequel le dispositif comprend en outre un moyen (2090 ; 3090 ; 4090 ; 5090 ; 6090 ; 7090) permettant de recevoir de l'huile lubrifiante, et dans lequel chaque raccord pour pièce à main (2060 ; 3060 ; 4060 ; 5060 ; 6060 ; 7060) comprend au moins une deuxième sortie (2063 ; 3063 ; 4063 ; 5063 ; 6063 ; 7063) permettant de nettoyer, désinfecter et lubrifier l'entraînement interne d'une pièce à main dentaire, le dispositif comprenant un moyen d'acheminement (2091 ; 3091 ; 4091 ; 5091 ; 6091 ; 7091) permettant d'acheminer ladite huile lubrifiante vers ladite deuxième sortie de raccord pour pièce à main.

4. Dispositif selon l'une quelconque des revendications précédentes, dans lequel le dispositif comprend en outre un moyen de collecte de liquide résiduaire (3081), ledit moyen de collecte de liquide résiduaire étant agencé de manière à collecter des liquides résiduaires en provenance de la chambre de traitement (3050) par l'intermédiaire ladite au moins une sortie de chambre (3080),
dans lequel le moyen de collecte de liquide résiduaire comprend une cuvette amovible (4082 ; 5082 ; 6082).

5. Dispositif selon l'une quelconque des revendications précédentes, dans lequel ledit moyen de réception d'une solution de nettoyage (2020 ; 3020 ; 4020 ; 5020 ; 6020), d'une solution désinfectante (1030 ; 2030 ; 3030 ; 4030 ; 5030 ; 6030) et d'huile lubrifiante (2090 ; 3090 ; 4090 ; 5090 ; 6090), comprend une chambre de réception (5100 ; 6100), comprenant des sections destinées à recevoir respectivement une solution de nettoyage (5120 ; 6120), une solution désinfectante (5130 ; 6130) et de l'huile lubrifiante (5190 ; 6190), chaque section comprenant en outre au moins une sortie (5121, 5131 ; 5191 ; 6121, 6131, 6191),
dans lequel le dispositif comprend un moyen d'acheminement de liquide (6026, 6034) raccordant la au moins une sortie (6121, 6131) de chacune desdites sections de chambre de réception (6120, 6130) audit moyen de collecte de liquide résiduaire (6082).

6. Dispositif selon l'une quelconque des revendications 3 à 5, dans lequel le dispositif comprend en outre un moyen de commande (6400) qui peut servir à permettre de manière sélective l'approvisionnent, et à commander la quantité, de ladite solution de nettoyage, de ladite solution désinfectante, de ladite huile lubrifiante et dudit air comprimé qui sont acheminés vers lesdites au moins deux sorties de raccord pour pièce à main et vers ladite au moins une buse de pulvérisation,
dans lequel ledit moyen de commande (6400) est un moyen programmable,
dans lequel au moins une des sections de réception (6120, 6130) de ladite chambre de réception (6100) comprend un moyen (6122, 6132) destiné à recevoir un conteneur d'approvisionnent,
dans lequel au moins une section de réception (6120, 6130) comprend un moyen (6600) permettant de percer lesdits conteneurs d'approvisionnent,
dans lequel ledit moyen de perçage (6600) comprend deux électrodes (6610, 6611) essentiellement verticales de différentes longueurs, dans lequel chaque électrode comprend une ouverture (6612, 6613) menant dans un tube creux, et dans lequel l'électrode (6610) la plus longue comprend un matériau électriquement isolant (6614) sur sa surface extérieure,
dans lequel ledit moyen de perçage (6600) comprend deux tubes essentiellement verticaux et concentriques (6620, 6621), le tube extérieur (6621) présentant un diamètre supérieur à celui du tube intérieur (6620), de sorte qu'une chambre de section annulaire (6624) est formée entre les deux tubes, dans lequel le moyen de perçage comprend au moins une ouverture menant dans le tube intérieur (6622), et au moins une ouverture menant dans ladite chambre annulaire (6623), et en outre
dans lequel le moyen de perçage (6600) comprend un tube extérieur (6625) comprenant une section d'extrémité distale (6627) présentant un diamètre inférieur à celui d'une section d'extrémité proximale (6628), dans lequel le tube extérieur (6625) comprend au moins une ouverture (6622) menant dans la section d'extrémité distale (6627) et au moins une ouverture (6623) menant dans la section d'extrémité proximale (6628), et dans lequel un tube intérieur (6626) d'un diamètre extérieur correspondant essentiellement au diamètre intérieur de ladite section d'extrémité distale (6627) est inséré de manière fermée et étanche dans le tube extérieur (6625).

7. Dispositif selon l'une quelconque des revendications précédentes, dans lequel la solution de nettoyage comprend un mélange de propylène glycol, de parabènes, de biguanides et d'agents complexants dans une solution aqueuse, dans lequel la solution désinfectante comprend entre 30 et 50 % en poids d'éthanol et entre 5 et 15 % en poids d'isopropanol avec des ajouts inoffensifs dans une solution aqueuse, dans lequel la chambre de traitement comprend une porte amovible (6300).

8. Procédé de nettoyage et de désinfection d'au moins une pièce à main dentaire, dans lequel une solution de nettoyage et une solution désinfectante sont injectées de manière sélective dans le corps intérieur de ladite au moins une pièce à main, et ladite solution de nettoyage et ladite solution désinfectante sont pulvérisées de manière sélective sur les faces extérieures de ladite pièce à main en suivant une direction qui n'est pas essentiellement colinéaire avec une orientation de l'axe de la au moins une pièce à main,
**caractérisé en ce que**
le procédé comprend en outre une étape consistant à mettre en mouvement grâce à un moteur électrique l'entraînement interne d'une pièce à main qui est raccordée à au moins une partie de pièce à main.

9. Procédé selon la revendication 8, dans lequel la solution de nettoyage comprend un mélange de propylène glycol, de parabènes, de biguanides et d'agents complexants en solution aqueuse,
dans lequel la solution désinfectante comprend entre 30 et 50 % en poids d'éthanol et entre 5 et 15 % en poids d'isopropanol avec des ajouts inoffensifs dans une solution aqueuse,
dans lequel 0,83 cm³ de la solution de nettoyage est injecté dans la chambre de traitement à travers la au moins une buse de pulvérisation, et dans lequel 0,86 cm³ de la solution de nettoyage est injecté à l'intérieur de chaque pièce à main dentaire, et dans lequel on laisse agir la solution sur le matériau pendant 37 s avant de rincer avec de l'air comprimé, ce qui est répété de manière consécutive quatre fois.

10. Procédé selon la revendication 9, dans lequel le procédé comprend en outre une étape consistant à injecter 3,32 cm³ de la solution désinfectante dans la chambre de traitement à travers la au moins une buse de pulvérisation, et dans lequel 2,075 cm³ de la solution désinfectante sont injectés à l'intérieur de chaque pièce à main dentaire, et dans lequel on laisse agir la solution sur le matériau pendant 120 s avant de rincer avec de l'air comprimé.

11. Procédé selon l'une quelconque des revendications 8 à 10, dans lequel le procédé comprend en outre une étape consistant à injecter de l'huile lubrifiante dans l'entraînement interne de chaque pièce à main dentaire.

12. Procédé de fonctionnement du dispositif selon l'une quelconque des revendications 1 à 7, dans lequel au moins une pièce à main est attachée au au moins un raccord pour pièce à main, et dans lequel 0,83 cm³ de la solution de nettoyage est injecté dans la chambre de traitement à travers la au moins une buse de pulvérisation, et dans lequel 0,86 cm³ de la solution de nettoyage est injecté à l'intérieur de chaque pièce à main dentaire à travers ladite au moins une sortie de raccord pour pièce à main, et dans lequel on laisse agir la solution sur le matériau pendant 37 s avant de rincer avec de l'air comprimé acheminé à travers ladite au moins une sortie de raccord pour pièce à main et ladite au moins une buse de pulvérisation.

13. Procédé selon la revendication 12, dans lequel le procédé comprend en outre une étape consistant à pulvériser 3,32 cm³ de la solution désinfectante dans la chambre de traitement à travers ladite au moins une buse de pulvérisation, et dans lequel 2,075 cm³ de la solution désinfectante sont injectés à l'intérieur de chaque pièce à main dentaire à travers ladite au moins une sortie de raccord pour pièce à main, et dans lequel on laisse agir la solution désinfectante sur le matériau pendant 120 s avant de rincer avec de l'air comprimé acheminé à travers ladite au moins une sortie de raccord pour pièce à main et ladite au moins une buse de pulvérisation.

14. Procédé selon la revendication 12 ou 13, dans lequel le procédé comprend en outre une étape consistant à injecter de l'huile lubrifiante dans l'entraînement interne de la au moins une pièce à main dentaire à travers la deuxième sortie de raccord pour pièce à main.
